# EUROPÄISCHE PATENTSCHRIFT

(11) **EP 0 414 088 B1**
(45) Veröffentlichungstag und Bekanntmachung des Hinweises auf die Patenterteilung: **27.10.1993**
(21) Anmeldenummer: 90115483.1
(22) Anmeldetag: 11.08.1990
(51) Int. Cl.: F16H 61/14

(54) **Steuereinrichtung für eine Überbrückungskupplung eines hydrokinetischen Drehmomentwandlers**
Control system for a torque converter lock-up clutch
Système de commande pour embrayage de pontage d'un convertisseur de couple

(30) Priorität: 25.08.1989 DE 3928048
(43) Veröffentlichungstag der Anmeldung: 27.02.1991
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE S. A., 92506 Rueil-Malmaison (FR)
(72) Erfinder: von der Lippe, Wolfgang, D-5330 Königswinter (DE); Biedermann, Sieghart, D-5024 Pulheim 1 (DE); Wirtz, Hans-Peter, D-5000 Köln 71 (DE); Kirchhoffer, Johann, D-5000 Köln 60 (DE); Schulz, Winfried, D-5024 Pulheim (DE)
(74) Vertreter: Messulam, Alec Moses

(56) Entgegenhaltungen:
- EP-A- 0 153 798
- EP-A- 0 195 295
- DE-A- 3 130 871
- DE-A- 3 818 102
- FR-A- 2 503 308

## Beschreibung

Die Erfindung bezieht sich auf eine Steuereinrichtung für eine Überbrückungskupplung eines hydrokinetischen Drehmomentwandlers in Verbindung mit einem Druckmittelkreislauf in einem hydrokinetisch-mechanischen Verbundgetriebe, insbesondere für Kraftfahrzeuge, der im Oberbegriff des Patentanspruches 1 erläuterten Art.

Aus der DE-C- 3121 749 ist einerseits ein Steuerverfahren für eine steuerbare Kupplung zwischen einer Antriebswelle und einer Abtriebswelle und andererseits eine Steuereinrichtung für eine Überbrückungskupplung eines hydrokinetischen Drehmomentwandlers zu entnehmen.

Das Steuerverfahren umfaßt die Schritte des Erfassens einer Abweichung von der Drehzahl der Antriebswelle durch eine Sensoreinrichtung und das Steuern der Differenz der Drehzahl der Antriebs- und der Abtriebswelle in der Weise, daß diese größer ist als die Abweichung in der Drehzahl der Antriebswelle.

Durch dieses bekannte Steuerverfahren kann erreicht werden, daß nachdem eine bestimmte Ungleichförmigkeit an der Antriebswelle erfaßt wird, die sich durch den Schlupf ergebende Differenz in der Drehzahl der Antriebs- und der Abtriebswelle jeweils größer gehalten wird als die Ungleichförmigkeit. Damit können unerwünschte Einflüsse von Drehschwingungen einer Brennkraftmaschine auf das nachgeschaltete hydrokinetisch-mechanische Verbundgetriebe vermieden werden.

Das bekannte Steuerverfahren weist den Nachteil auf, daß hierfür ein verhältnismäßig aufwendiger Mikroprozessor erforderlich ist, um bei einer jeweils auftretenden Ungleichförmigkeit in der Drehzahl der Antriebswelle einen der jeweiligen Differenz in der Drehzahl der Antriebs- und Abtriebswelle entsprechenden größeren Schlupf zwischen der Antriebs- und Abtriebswelle zu errechnen und eine entsprechende Steuergröße bereitzustellen.

Die bekannte Steuereinrichtung besteht hierbei aus einem Überbrückungskupplung-Steuerventil, an dem Druckmittel unter Leitungsdruck anliegt, der über ein zugeordnetes Druckmodulierventil in Form eines impulsbreitenmodulierten Solenoidventiles geregelt wird, das unmittelbar über den Mikroprozessor elektrisch angesteuert wird.

Der Mikroprozessor muß hierbei auch die für unterschiedliche Betriebszustände vorgesehenen von Schaltpositionen des hydrokinetisch-mechanischen Verbundgetriebe abhängigen weiteren Ansteuerungen der Überbrückungskupplung bereitstellen.

Aus der DE-C- 3130 871 ist eine Steuereinrichtung für eine Überbrückungskupplung eines hydrokinetischen Drehmomentwand lers in Verbindung mit einem Druckmittelkreislauf in einem hydrokinetisch-mechanischem Verbundgetriebe, insbesondere für Kraftfahrzeuge, etwa der im Oberbegriff des Patentanspruches 1 erläuterten Art bekannt, bei der an einem Überbrückungskupplungdruck-Steuerventil Druckmittel unter Leitungsdruck anliegt und durch Einwirken eines Steuerdruckes in Abhängigkeit von Betriebszuständen selektiv einem Anlege-Druckraum oder einem Ablege-Druckraum zuführbar ist, wobei das Überbrückungskupplungdruck-Steuerventil aus einem in einer Ventilbohrung angeordneten Ventilkörper mit drei Steuerbünden besteht, der über eine Ventilfeder in seiner Ausgangslage gehalten ist, in der er Leitungsdruck zwischen den Steuerbünden 2 und 3 zum Ablege-Druckraum führt und den Anlege-Druckraum zwischen den Steuerbünden 1 und 2 mit dem Kühler verbindet und wobei am Steuerbund 3 ein Steuerdruck anlegbar ist, der von einem Magnetventil gesteuert wird, um den Ventilkörper entgegen der Kraft der Feder in seine Hochschaltlage zu bewegen, in der er zwischen den Steuerbünden 1 und 2 Leitungsdruck zum Anlege-Druckraum führt und den Ablege-Druckraum mit dem Kühler verbindet.

Diese bekannte Steuereinrichtung weist den Nachteil auf, daß sie neben dem normalen Überbrückungskupplung-Steuerventil das erwähnte Überbrückungskupplungdruck-Steuerventil benötigt, auf das noch ein Druckreduzierventil und ein Magnetventil einwirken. Der bauliche Aufwand ist somit verhältnismäßig groß.

Aus der DE-A- 3818 102 ist eine Steuereinrichtung für eine Überbrückungskupplung eines hydrokinetischen Drehmomentwandlers in Verbindung mit einem Druckmittelkreislauf in einem hydrokinetisch-mechanischen Verbundgetriebe, insbesondere für Kraftfahrzeuge, etwa der im Oberbegriff des Patentanspruches 1 erläuterten Art bekannt.

Bei dieser bekannten Steuereinrichtung ist wieder ein Überbrückungskupplungdruck-Steuerventil vorgesehen, das wieder aus einem in einer Ventilbohrung angeordneten Ventilkörper mit drei Steuerbünden besteht, der über eine Ventilfeder in seiner Ausgangslage gehalten ist und auf den einenends ein durch ein Magnetventil erstellter Steuerdruck einwirkt, der in Abhängigkeit von der Drehmomentübertragung variiert wird, wobei durch den Vergleich der Antriebs- mit der Abtriebswellendrehzahl auf die erforderliche Drehmomentübertragungskapazität geschlossen wird und dieser ein entsprechender in einem Speicher abgelegter Wert eines Steuerdruckes zugeordnet wird, um einen erwünschten Schlupf zuzulassen.

Bei dieser bekannten Steuereinrichtung muß wieder der Mikroprozessor auch die weiteren Anlege- und Ablegefunktionen der Überbrückungskupplung mit bereitstellen.

Aus der DE-C- 3103 838 ist eine Steuereinrichtung für eine Überbrückungskupplung eines hydrokinetischen Drehmomentwandlers in Verbindung mit einem Druckmittelkreislauf in einem hydrokinetisch-mechanischem Verbundgetriebe, insbesondere für Kraftfahrzeuge, der im Oberbegriff des Patentanspruches 1 erläuterten Art bekannt, bei der an einem Überbrückungskupplung-Steuerventil Druckmittel unter Leitungsdruck anliegt und durch Einwirken eines Steuerdruckes in Abhängigkeit von Betriebszuständen selektiv einem Anlege-Druckraum oder einem Ablege-Druckraum zuführbar ist, wobei das Überbrückungskupplung-Steuerventil aus einem in einer Ventilbohrung angeordneten Ventilkörper mit vier Steuerbünden besteht, der über eine Ventilfeder in seiner Ausgangslage gehalten ist, in der er Leitungsdruck zwischen den Steuerbünden 1 und 2 zum Ablege-Druckraum führt und den Anlege-Druckraum über eine Leitung mit dem Kühler und zwischen den Steuerbünden 2 und 3 mit einem Auslaß verbindet und wobei am Steuerbund 4 ein Steuerdruck anlegbar ist, der den Ventilkörper entgegen der Kraft der Ventilfeder in seine Hochschaltlage bewegt, in der er zwischen den Steuerbünden 2 und 3 Leitungsdruck über den Kühler dem Anlege- Druckraum des Drehmomentwandlers zuführt, während der Ablege-Druckraum zwischen den Steuerbünden 1 und 2 mit einem Auslaß verbunden wird.

Die Erfindung geht von dieser Steuereinrichtung aus, wie sie für bisher übliche nicht schlupfgesteuerte Überbrückungskupplungen bekannt ist und hat zum Ziel, mit einem geringstmöglichen Aufwand an Änderungen im Steuerventilsystem und mit geringem baulichen Aufwand an der Mikroprozessorseite eine Schlupfsteuerung der Überbrückungskupplung bereitzustellen.

Gemäß der Erfindung wird diese Aufgabe gelöst, indem eine Steuereinrichtung der im Oberbegriff des Patentanspruches 1 erläuterten Art die im Kennzeichenteil des Patentanspruches 1 aufgezeigten Merkmale aufweist.

Dadurch, daß in der zwischen den Steuerbünden 1 und 2 abgehenden Auslaßleitung ein Drucksteuerventil angeordnet ist, das als impulsbreitenmoduliertes Solenoid-Ventil ausgeführt ist, das dem im Anlege-Druckraum einwirkenden Leitungsdruck einen Gegendruck im Ablege-Druckraum entgegenstellt, der in seiner Höhe veränderbar ist, um den Ist-Schlupf der Überbrückungskupplung der in einem Kennfeld im Mikroprozessor gespeicherten Soll-Drehzahldifferenz zwischen der An- und Abtriebswelle anzugleichen.

Im Anspruch 2 ist ein weiteres Ausführungsbeispiel der Erfindung erläutert, das eine weitere Verringerung des Bauaufwandes ermöglicht.

Dadurch, daß der den Ventilkörper in der Ventilbohrung bewegende Solenoid des Überbrückungskupplung-Steuerventiles unmittelbar als ein pulsbreitenmodelierbarer Solenoid ausgelegt ist, kann über nur ein Solenoid-Ventil sowohl das Anlegen oder Ablegen der Überbrückungskupplung als auch die Größe des zugelassenen Schlupfes der angelegten Überbrükkungskupplung gesteuert werden.

Im Anspruch 3 ist ein weiteres Ausführungsbeispiel der Erfindung erläutert, das bei noch weiter verringertem Bauaufwand auch eine aktive Erhöhung des Gegendruckes im Ablegeraum ermöglicht.

Dieses wird dadurch erreicht, daß der der Schlupf steuernde Gegendruck am Überbrückungskupplungdruck-Steuerventil durch den pulsbreiten-modulierten Solenoid unmittelbar mit dem Versorgungsdruck beaufschlagt werden kann.

Die Erfindung wird anhand dreier in den beiliegenden Zeichnungen gezeigter Ausführungsbeispiele näher erläutert.

Es zeigt:
- Fig. 1: einen Ausschnitt aus einem Steuerventilsystems eines automatischen Getriebes mit nur den für die Steuerung der Überbrückungskupplung erforderlichen Ventilen und Leitungen und einer ersten Ausführungsform der Erfindung bei offener Überbrückungskupplung und externem Solenoid;
- Fig. 2: eine ähnliche Ansicht wie Fig. 1 jedoch bei angelegter Überbrückungskupplung;
- Fig. 3: eine vergrößerte Darstellung einer zweiten Ausführungsform des Überbrückungskupplungdruck-Steuerventiles mit integriertem Solenoid bei offener Überbrückungskupplung;
- Fig. 4: eine ähnliche Darstellung wie Fig. 3, jedoch beim Einleiten des Schließens der Überbrükkungskupplung;
- Fig. 5: eine Darstellung wie Fig. 4 jedoch bei angelegter Überbrückungskupplung und Schaltstellung des Solenoid zur Verringerung des Schlupfes;
- Fig. 6: eine Darstellung wie Fig. 5, jedoch mit Schaltstellung des Solenoid zur Erhöhung des Schlupfes und
- Fig. 7: eine Darstellung wie Fig. 6 mit einer dritten Ausführungsform der Erfindung mit einem Überbrückungskupplungdruck-Steuerventil mit aktiver Gegendruckerhöhung bei angelegter Überbrückungskupplung.

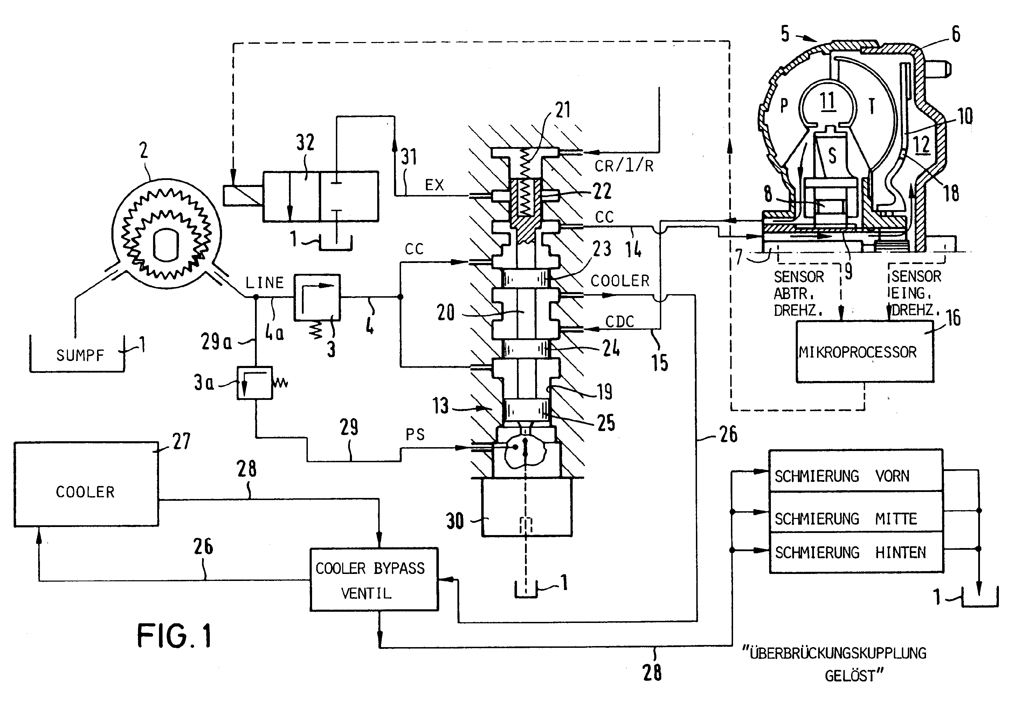

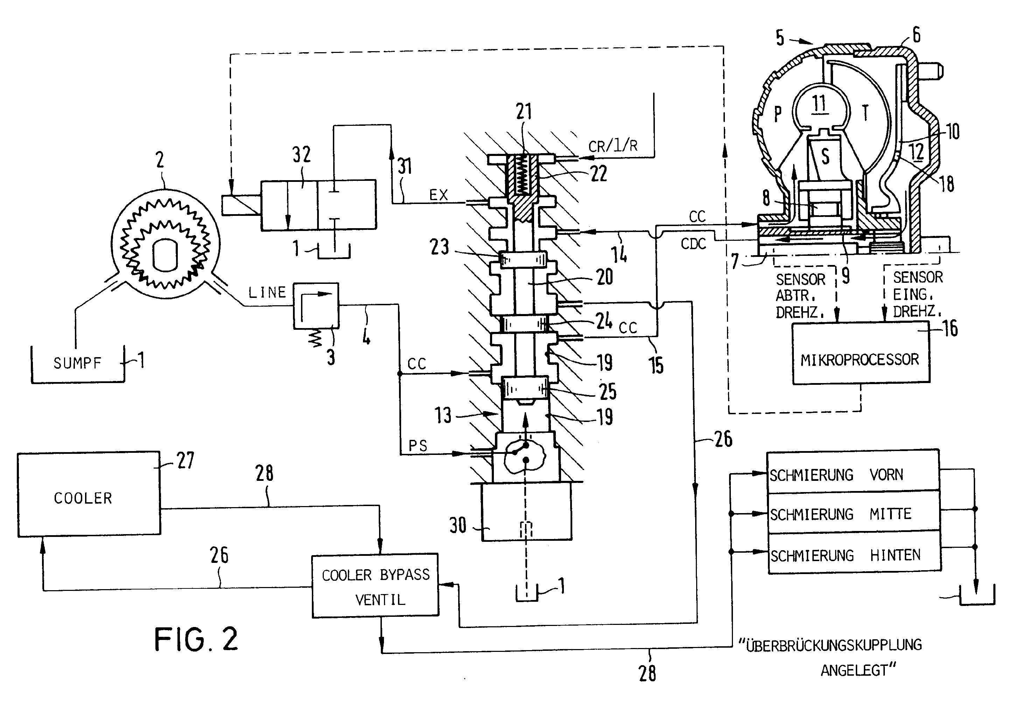

In den Fig. 1 und 2 ist ein Ausschnitt aus einem Steuerventilsystem eines automatischen Getriebes eines Kraftfahrzeuges gezeigt, in dem nur die für die Steuerung der Überbrükkungskupplung des Drehmomentwandlers erforderlichen Bauteile und Ventile dargestellt sind.

In dem Steuerventilsystem wird von einem Sumpf 1 Druckmittel über eine Druckmittelpumpe 2 angesaugt und einem Hauptdruckregulierventil 3 zugeführt, das in herkömmlicher Weise in Abhängigkeit von der Drehmomentanforderung und der Fahrgeschwindigkeit einen bestimmten Leitungsdruck in einer Leitung 4a einreguliert, wobei dieser Leitungsdruck "Line" einer Vielzahl von Steuerventilen im hydraulischen Steuersystem des automatischen Getriebes des Kraftfahrzeuges zugeführt wird.

Ein Bestandteil des hydrokinetisch-mechanischen Verbundgetriebes ist ein hydrokinetischer Drehmomentwandler 5 dessen Pumpenrad P mit einem Antriebsdeckel 6 verbunden ist, der über Mitnahmebolzen von der Kurbelwelle einer Brennkraftmaschine (nicht gezeigt) angetrieben wird.

Das Turbinenrad T ist mit einer Turbinen- oder Abtriebswelle 7 verbunden, die die Eingangswelle des nachgeschalteten Planetenrad-Verbundgetriebes bildet.

Zwischen dem Pumpenrad P und dem Turbinenrad T ist in herkömmlicher Weise ein Leitrad S angeordnet, das sich in bekannter Weise über einen Freilauf 8 an eine im Gehäuse festgelegten Hohlwelle 9 abstützt.

Eine Kupplungsscheibe 10 einer Drehmomentwandler-Überbrükkungskupplung ist zwischen dem Antriebsdeckel 6 und dem Turbinenrad T auf der Turbinenradnabe axial beweglich aber drehfest angeordnet.

Der eigentliche Drehmomentwandlerraum wird nachfolgend als Anlege-Raum 11 und der zwischen der Kupplungsscheibe 10 und dem Antriebsmantel liegende Raum wird als Ablege-Raum 12 bezeichnet.

Ein im wesentlichen herkömmliches Überbrückungskupplung-Steuerventil 13 kann sowohl über eine Leitung 14 den Ablege-Raum 12 als auch über eine Leitung 15 den Anlege-Raum 11 mit Druckmittel unter Leitungsdruck beaufschlagen.

An dem Antriebsdeckel 6 und an der Abtriebswelle 7 sind nicht näher bezeichnete Drehzahlsensoren angeordnet, deren Signale einer elektronischen Auswerteinheit 16 zugeleitet werden, die die jeweilige Differenz der Drehzahl des Antriebsdeckels 6 und der Drehzahl der Abtriebswelle 7 feststellt und danach eine in einem Kennfeld abgelegte Größe des erwünschten Schlupfes abruft und entsprechende elektrische Signale einem impulsbreitenmodelierten Solenoid 32 zuleitet, der durch wechselseitiges Öffnen und Schließen der Leitung 31 den Druck im Ablegeraum 12 beeinflussen kann.

Es muß nun auf ein für die erfindungsgemäße Steuereinrichtung wesentliches Merkmal hingewiesen werden, das darin besteht, daß in der Kupplungsscheibe 10 Drosselöffnungen 18 angeordnet sind, die eine ständige Verbindung zwischen dem Anlege-Raum 11 und dem Ablege-Raum 12 herstellen.

Das Überbrückungskupplung-Steuerventil 13 besteht aus einem in einer Ventilbohrung 19 angeordneten Ventilkörper 20, der über eine Ventilfeder 21 in seiner Ausgangslage gehalten wird. Der Ventilkörper 20 weist einen ersten Steuerbund 22, einen zweiten Steuerbund 23, einen dritten Steuerbund 24 und einen vierten Steuerbund 25 auf. Zwischen den Steuerbünden 22 und 23 sowie 24 und 25 steht über die Leitung 4 ein Leitungsdruck an, der entsprechend den unterschiedlichen Funktionen als "CC/Cooler"-Druck (CC = Converter Charge Druck; Cooler = Kühler-Druck) bzw. "CDC"-Druck (CDC = Converter Discharge) beschrieben ist. Zwischen den Steuerbünden 22 und 23 geht die Leitung 14 zum Ablege-Raum 12 ab und zwischen den Steuerbünden 23 und 24 führt eine Leitung 15 zum Anlege-Raum 11 sowie eine Leitung 26 zum Kühler 27. Vom Kühler 27 führt eine Leitung 28 zu den Schmiermittelkreisläufen im Getriebe.

Der Ventilkörper 20 des Überbrückungskupplung-Steuerventil 13 kann durch einen hydraulischen Steuerdruck Ps, welcher über die Leitung 29 von einem elektrisch ansteuerbaren Solenoid 30 zu der Unterseite des Ventilkörpers 20 durchgeschaltet werden kann, betätigt werden.

Im vorliegenden Ausführungsbeispiel erzeugt das "Solenoid Pressure Limit Valve" 3a, welches über die Leitung 29a mit dem Leitungsdruck "Line" versorgt wird, einen konstanten Steuerdruck Ps, mit dem alle Solenoid-Ventile im Getriebe versorgt werden.

Bei einer weiteren Ausführungsform, die in den Fig. 2 bis Fig. 7 dargestellt ist, wird der Steuerdruck Ps durch ein "Anzapfen" der Leitung 4 gewonnen. Dementsprechend steht er am Überbrückungskupplung-Steuerventil 13 derart an, daß er durch einen Plunger des Solenoids 30 abgesperrt wird solange dieser stromlos ist. Dadurch wird der Ventilkörper 20 durch die Ventilfeder 21 nach unten gedrückt so daß der Leitungsdruck über die Leitung 4 als "CC"-Druck (Converter Charge) zwischen den Steuerbünden 22 und 23 über die Leitung 14 dem Ablege-Raum 12 zugeführt wird, wodurch die Überbrückungskupplung in ihrer geöffneten Lage gehalten wird.

Wird der Solenoid 30 mit einem elektrischen Signal beaufschlagt, so gibt er den Steuerdruck Ps frei und dieser wirkt auf den Steuerbund 25 ein und verschiebt den Ventilkörper 20 entgegen der Kraft der Ventilfeder 21 in seine Hochschaltlage. Diese Schaltstellung ist in Fig. 2 gezeigt.

Dadurch wird der in der Leitung 4 anstehende Leitungsdruck als "CC"-Druck zwischen den Steuerbünden 24 und 25 über die Leitung 15 dem Anlege-Raum 11 zugeleitet, während der Ablege-Raum 12 über die Leitung 14 und zwischen den Steuerbünden 22 und 23 zu einer Auslaßleitung 31 geführt wird, in der der erfindungsgemäße pulsweitenmodulierte Solenoid 32 angeordnet ist.

Die Überbrückungskupplung befindet sich damit in ihrer angelegten Stellung, bei der der Druckabfall über die Drosselöffnungen 18 in der Kupplungsscheibe 10 so groß ist, daß die Überbrückungskupplung voll eingerückt wird.

Soll nun einer bestimmten Differenz in der Drehzahl des Antriebes 6 zur Drehzahl der Abtriebswelle 7 eine bestimmte Größe eines erwünschten Schlupfes der Überbrückungskupplung zugeordnet werden, so wird über das Überbrückungskupplungdruck-Steuerventil 32 eine zusätzliche Drosselung des Abflusses des Druckmittels aus dem Ablege-Raum 12 bewirkt, wodurch der Druckabfall an der Kupplungsscheibe 10 nicht mehr ausreichend groß ist und infolge der mangelnden Druckdifferenz ein Gleiten der Kupplungsscheibe 10 auftreten wird.

Es wird noch darauf hingewiesen, daß die Drosselöffnungen 18 in der Kupplungsscheibe 10 auch in Form von radialen Kanälen unmittelbar im Reibbelag der Kupplungsscheibe 10 angeordnet sein können, so daß auch insbesondere im Schlupfzustand für eine ausreichende und zuverlässige Kühlung der gleitenden Kupplungsscheibe 10 gesorgt ist.

Die beiden Figuren 1 und 2 sind bis auf die Angabe der Funktionsdrücke, der Führung des Steuerdruckes Ps, der Stellung des Ventilkörpers 20 und der Flußrichtung des Druckmittels identisch und zeigen im Falle der Figur 1 die Druckmittelführung bei geöffneter Überbrückungskupplung und im Falle der Fig. 2 die Druckmittelführung bei angelegter Überbrükkungskupplung.

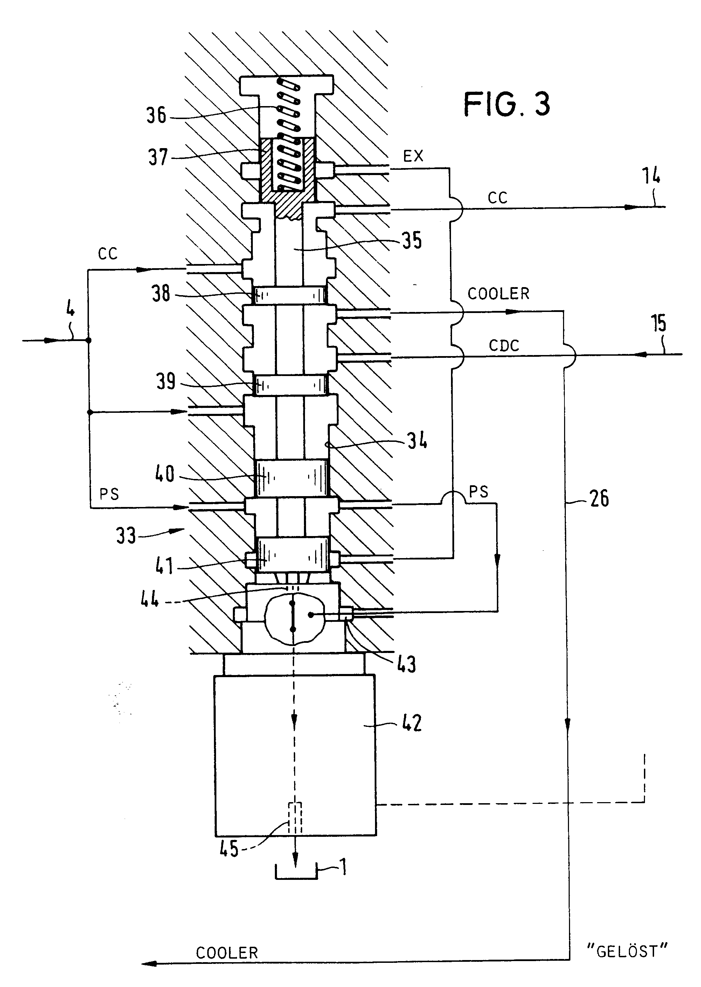

In den Figuren 3 bis 6 ist eine zweite Ausführungsform der Erfindung gezeigt, bei der nur ein Überbrückungskupplungdruck-Steuerventil 33 vorgesehen ist, das aus einem in einer Ventilbohrung 34 angeordneten Ventilkörper 35 be- steht, der über eine Ventilfeder 36 in seiner Ausgangslage gehalten wird.

Der Ventilkörper 35 ist mit Steuerbünden 37, 38, 39, 40, und 41 versehen und wird über einen pulsweitenmodulierten Solenoid 42 betätigt, wodurch über eine entsprechende elektrische Ansteuerung des Solenoids 42 sowohl die Anlege- als auch die Ablegefunktion der Überbrückungskupplung als auch deren unterschiedliche Schlupfzustände gesteuert werden können.

Der pulsweitenmodulierte Solenoid 42 hat drei Druckmittelöffnungen 43, 44 und 45 und zwei Schaltstellungen:

Bei Pulsweite 0 % ist die Druckmittelöffnung 43 ständig geschlossen und die Druckmittelöffnungen 44 und 45 in Richtung Ölsumpf ständig miteinander verbunden.

Bei Pulsweite 100 % ist die Druckmittelöffnung 45 zum Ölsumpf ständig geschlossen und die Druckmittelöffnung 43 und 44 ständig miteinander verbunden.

Bei der Wahl von Zwischenwerten der Pulsweite kann der prozentuale zeitliche Anteil der beiden Schaltstellungen beliebig eingestellt werden.

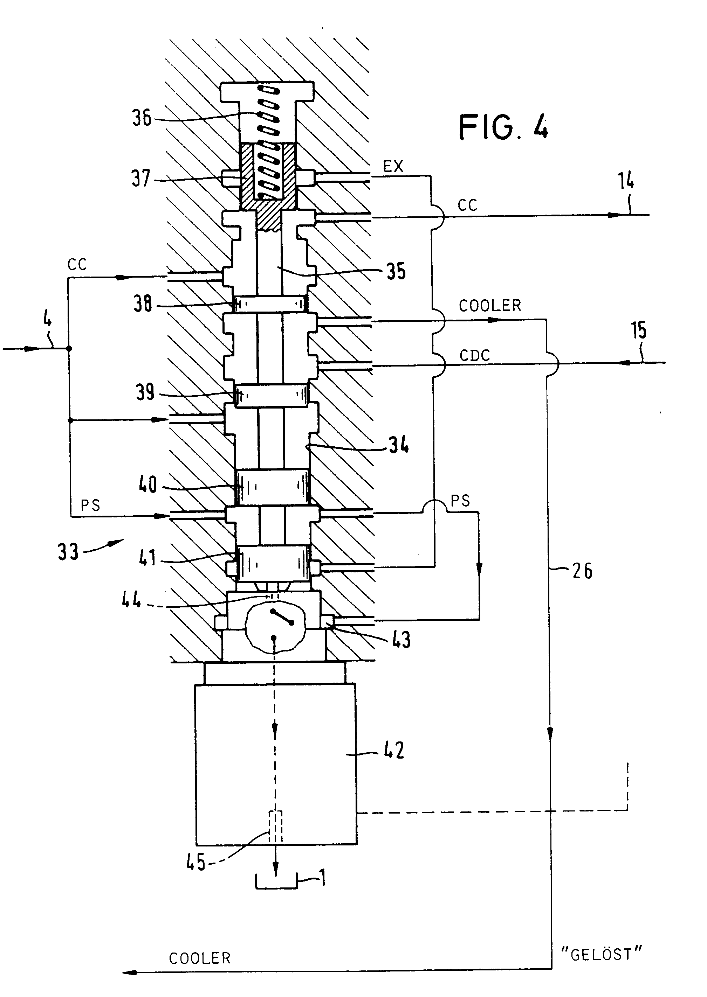

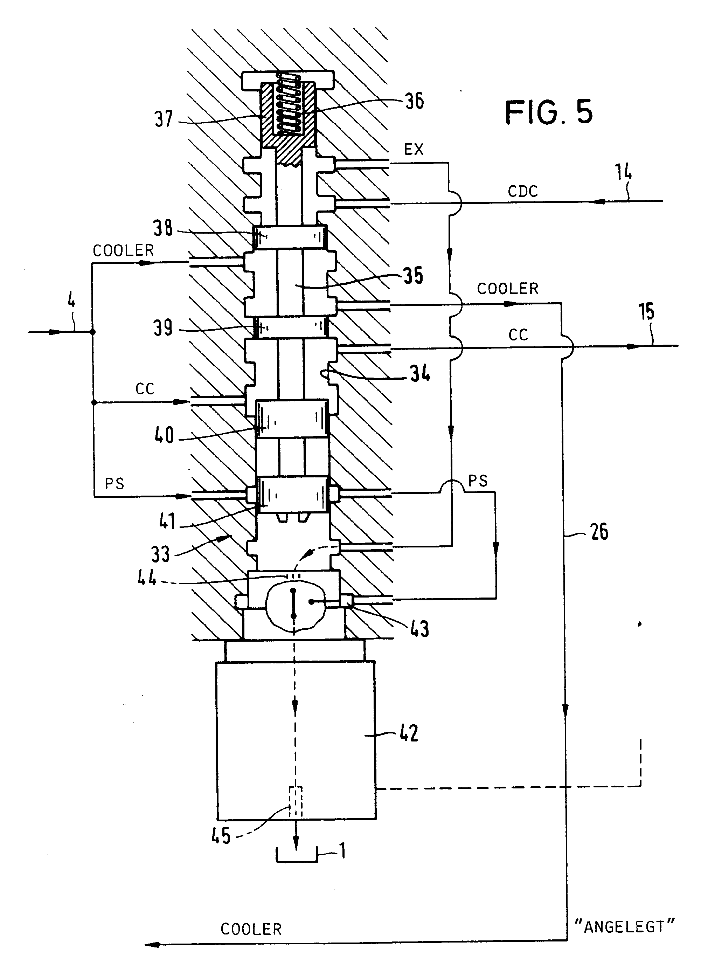

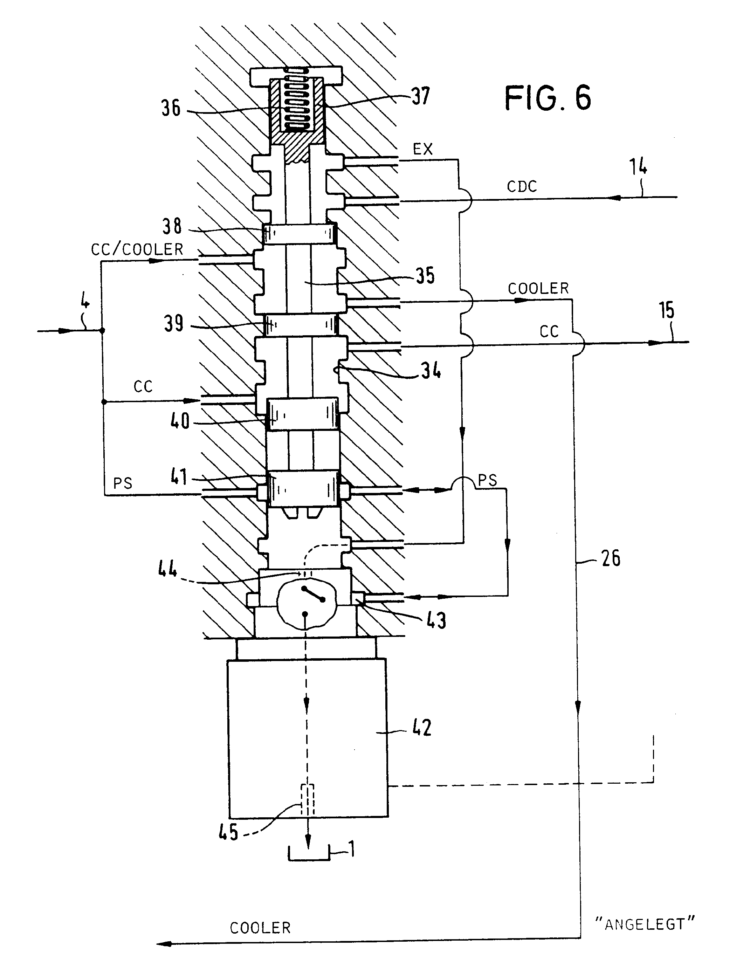

Die Figuren 3 bis 6 sind wieder bis auf die unterschiedlich eingetragenen Funktionsdrücke und die Flußrichtung des Druckmittels identisch, wobei Fig. 3 und 4 den Druckmittelfluß bei geöffneter Überbrückungskupplung zeigt während Fig. 5 und 6 den Druckmittelfluß bei angelegter Überbrückungskupplung zeigt.

Die Funktionsweise der erfindungsgemäßen Steuereinheit wird nachfolgend erläutert.

Bei voll geöffneter Überbrückungskupplung, siehe Fig. 3, beträgt die Pulsweite, die an dem Solenoid 42 anliegt 0 %, d.h. die Druckmittelöffnung 43 ist ständig geschlossen und der Steuerdruck Ps somit abgesperrt. Der Raum unterhalb des Ventilkörpers 35 ist dagegen über die bei Pulsweite 0 % ständig miteinander verbundenen Druckmittelöffnungen 44 und 45 mit dem Sumpf verbunden und somit drucklos und die Feder 36 drückt den Ventilkörper 35 in seine untere Endstellung, bei der der Druckmittelstrom die Überbrückungskupplung voll öffnet.

Das Schließen der Überbrückungskupplung, siehe Fig. 4, wird eingeleitet, indem die Pulsweite auf 100 % geschaltet wird, d.h. die Druckmittelöffnung 45 ist ständig geschlossen und der Steuerdruck Ps gelangt über die ständig miteinander verbundenen Druckmittelöffnungen 43 und 44 an die Unterseite des Ventilkörpers 35. Dadurch wird dieser entgegen der Federkraft in die obere Endstellung gedrückt, bei der die Druckmittelströme dann, wie in Fig. 5 und 6 gezeigt, die Überbrückungskupplung anlegen. Der Steuerdruck Ps wird dabei durch den Steuerbund 41 abgesperrt und der Ventilkörper 35 bleibt trotzdem in seiner oberen Endstellung, da der im Ablegeraum 12 ständig vorhandene Druck über die Leitung 14 an die Unterseite des Ventilkörpers 35 gelangt.

Die Regelung des Schlupfes durch die Veränderung des Druckes im Ablegeraum 12 wird nachfolgend in Zusammenhang mit den Fig. 5 und 6 näher erläutert.

In Fig. 5 wird die Schaltstellung des Solenoid zur Verringerung des Schlupfes gezeigt.

Wird z.B. beim Gasgeben durch Zunahme der Differenz zwischen der Drehzahl des Antriebs und der Drehzahl der Abtriebswelle der Ist-Schlupf zu groß, so wird im Kennfeld die Größe des gewünschten Soll-Schlupfes abgelesen, mit der Größe des Ist-Schlupfes verglichen, und ein dieser Abweichung angepaßtes Signal an das Überbrückungskupplungdruck-Steuerventil 33 geliefert. Dieses Signal hat eine relativ kleine Pulsweite. Damit hält der Solenoid 42, wie in Fig. 5 gezeigt, die Druckmittelöffnung 43 prozentual länger geschlossen und die Druckmittelöffnungen 44 und 45 prozentual länger miteinander verbunden. Dadurch baut sich der Druck im Ablege-Raum 12 über die Leitung 14 stärker ab, wodurch sich eine höhere Druckdifferenz einstellt und dementsprechend die Kupplungscheibe 10 mit höherer Kupplungskraft angelegt wird.

In Fig. 6 wird die Schaltstellung des Solenoid zur Erhöhung des Schlupfes gezeigt.

Wird beim Gaswegnehmen der Schlupf zu klein, so wird wieder durch entsprechendes Nachsehen im Kennfeld eine entsprechende Ansteuerung des Überbrückungskupplungdruck-Steuerventiles 33 bewirkt. Das jetzige Signal hat nun eine relativ große Pulsweite. Damit hält der Solenoid 42, wie in Fig. 6 gezeigt, die Druckmittelöffnung 45 prozentual länger geschlossen und die Druckmittelöffnungen 43 und 44 prozentual länger miteinander verbunden.

Der Ablegeraum 12 ist damit über die Leitung 14 durch den Steuerkolben 41 abgesperrt, wodurch sich über die Drosselöffnungen 18 der Druck im Ablege-Raum 12 erhöht und hierdurch die Druckdifferenz abnimmt, wodurch die Kupplungsscheibe 10 mit einer verringerten Kupplungskraft angelegt wird, so daß der Schlupf wie gewünscht ansteigt.

Eine entsprechende Regelung erfolgt hierbei so lange, bis der festgestellte Schlupf einem in einem Kennfeld im Rechner abgelegten Soll-Schlupf entspricht.

Diese Funktionsweise ist im wesentlichen die gleiche unabhängig davon, ob, wie in den Figuren 1 und 2 gezeigt, dem Überbrückungskupplung-Steuerventil 13 ein unabhängiges pulsweitmoduliertes Solenoid-Ventil 32 nachgeschaltet ist oder ob das Überbrückungskupplungdruck-Steuerventil 33 mit einem unmittelbar angeordneten pulsweitenmodulierten Solenoid 42 betätigt wird.

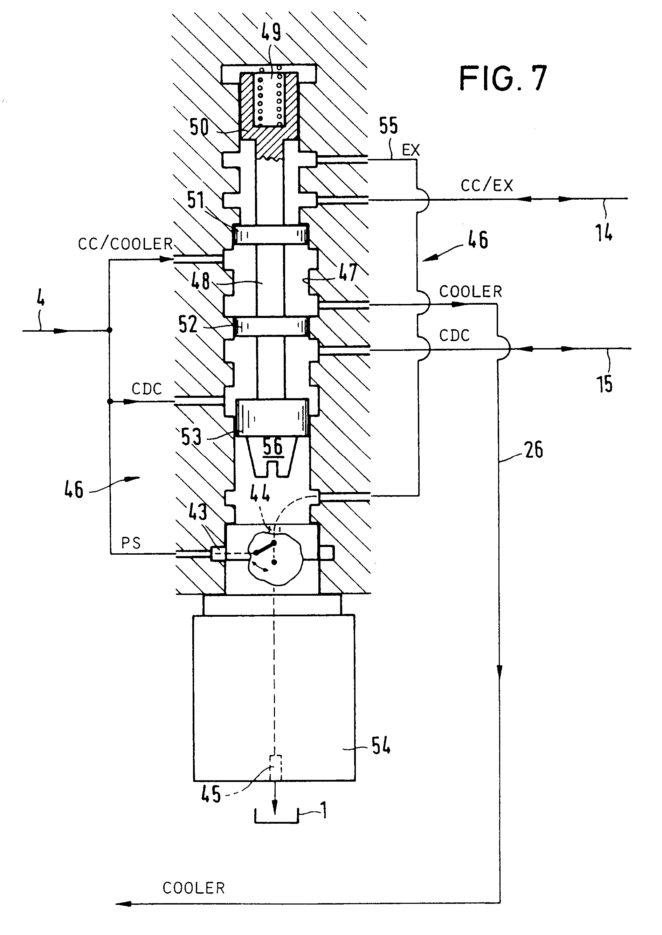

In Fig. 7 ist eine dritte Ausführungsform der Erfindung gezeigt, bei der wiederum nur ein Überbrückungskupplungdruck-Steuerventil 46 vorgesehen ist, das aus einem in einer Ventilbohrung 47 angeordenten Ventilkörper 48 besteht, der über eine Ventilfeder 49 in seiner nicht gezeigten Ausgangslage gehalten wird.

Der Ventilkörper 48 ist mit Steuerbünden 50, 51, 52 und 53 versehen und wird über einen pulsweitenmodulierten Solenoid 54 betätigt, wodurch Anlege- und Ablegefuktion als auch der Schlupf der Überbrückungskupplung gesteuert werden können.

Der Steuerdruck Ps wird nicht wie bei der zweiten Ausführungsform durch den Steuerbund 41, wie in Fig. 5 und 6 gezeigt, bei angelegter Überbrückungskupplung abgesperrt, sondern wird an die Druckmittelöffnung 43 des Solenoid 54 angelegt und kann so aktiv den Druck im Ablegeraum 12 beeinflussen.

Die Funktionsweise der erfindungsgemäßen Steuereinheit wird nachfolgend erläutert.

Soll der Schlupf erhöht werden, wird an dem Solenoid 54 ein Signal mit relativ großer Pulsweite angelegt. Dadurch hält der Solenoid 54 die Druckmittelöffnung 45 prozentual länger geschlossen und die Druckmittelöffnungen 43 und 44 prozentual länger miteinander verbunden.

Der Steuerdruck Ps gelangt durch diese Öffnungen 43 und 44 über die Leitung 55 zum Ablegeraum 12 uni erhöht hier direkt den Druck, wodurch die Druckdifferenz abnimmt und die Kupplungsscheibe 10 mit verringerter Kraft angelegt wird, so daß der Schlupf ansteigt.

Die Funktionsweise zur Verringerung des Schlupfes entspricht genau der zweiten Ausführungsform der Erfindung.

Durch ein prozentual längeres Absperren der Druckmittelöffnung 43 und damit des Steuerdruckes Ps und ein prozentual längeres Verbinden der Druckmittelöffnungen 44 und 45 kann sich der Druck im Ablegeraum 12 über die Leitung 55 abbauen, wodurch die Druckdifferenz zunimmt und der Schlupf vermindert wird.

## Patentansprüche

1. Steuereinrichtung für eine Überbrückungskupplung (10) eines hydrokinetischen Drehmomentwandlers (5) in Verbindung mit einem Druckmittelkreislauf in einem hydrokinetisch-mechanischen Verbundgetriebe, insbesondere für Kraftfahrzeuge,
- mit einem Überbrückungskupplung-Steuerventil (13), an dem Leitungsdruck anliegt, der durch Einwirken eines Steuerdruckes (Ps) in Abhängigkeit von Betriebszuständen selektiv einem Anlege-Druckraum (11) oder einem Ablege-Druckraum (12) zuführbar ist,
- das Überbrückungskupplung-Steuerventil (13) aus einem in einer Ventilbohrung (19) angeordneten Ventilkörper (20) mit vier Steuerbünden (22, 23, 24 und 25) besteht, der über eine Ventilfeder (21) in seiner Ausgangslage gehalten ist, in der er Leitungsdruck zwischen den Steuerbünden (22 und 23) zum Ablege-Druckraum (12) führt und den Anlege-Druckraum (11) über eine Leitung (15) zwischen den Steuerbünden (23 und 24) mit dem Kühler (17) verbindet,
- am Steuerbund (25) der Steuerdruck (Ps) anlegbar ist, der den Ventilkörper (20) in seine Hochschaltlage bewegt, in der er Leitungsdruck einerseits zwischen den Steuerbünden (24 und 25) dem Anlege-Druckraum (11), andererseits zwischen den Steuerbünden (23 und 24) dem Kühler zuführt und den Ablege-Druckraum (12) zwischen den Steuerbünden (22 und 23) mit einem Auslaß verbindet,
**dadurch gekennzeichnet**, daß
- in der zwischen den Steuerbünden (22 und 23) abgehenden Auslaßleitung (31) ein Überbrückungskupplung-Steuerventil (32) in Form eines pulsweitenmodulierten Solenoid-Ventiles angeordnet ist, durch das die zwischen dem Anlege-Druckraum (11) und dem Ablege-Druckraum (12) infolge der Drosselöffnung (18) in der Kupplungsscheibe (10) auftretende Druckdifferenz derart verringerbar ist, daß die Kupplungskraft der Überbrückungskupplung einen bestimmten erwünschten Schlupf zulassend steuerbar ist.

2. Steuereinrichtung für eine Überbrückungskupplung (10) eines hydrokinetischen Drehmomentwandlers (5) in Verbindung mit einem Schmiermittelkreislauf in einem hydrokinetisch-mechanischem Verbundgetriebe, insbesondere für Kraftfahrfahrzeuge, wobei an einem Überbrückungskupplungdruck-Steuerventil (33) Leitungsdruck anliegt, der über einwirkenden Steuerdruck oder einwirkende Steuersignale in Abhängigkeit von Betriebszuständen selektiv einem Anlege-Druckraum (11) oder einem Ablege-Druckraum (12) zuführbar ist,
**dadurch gekennzeichnet**, daß
das Überbrückungskupplungdruck-Steuerventil (33) aus einem in einer Ventilbohrung (34) angeordnetem Ventilkörper (35) mit fünf Steuerbünden (37, 38, 39, 40, und 41) besteht, der über eine Ventilfeder (36) in seiner Ausgangslage gehalten ist, in der er Leitungsdruck zwischen den Steuerbünden (37 und 38) zum Ablege-Druckraum (12) führt und den Anlege-Druckraum (11) über eine Leitung mit dem Kühler verbindet
- am Steuerbund (41) der Steuerdruck (Ps) durch Aktivieren eines pulsweitenmodulierten Solenoids (42) anlegbar ist, der den Ventilkörper (35) entgegen der Kraft der Ventilfeder (36) in seine Hochschaltlage bewegt, in der er zwischen den Steuerbünden (39 und 40) Leitungsdruck in den Anlege-Druckraum (11) führt, während er den Ablege-Druckraum (12) zwischen den Steuerbünden (37 und 38) mit einem Auslaß verbindet, der über eine Leitung zu der Unterseite des Ventilkörpers (35) führt, wo der herrschende Druck einerseits auf den Steuerbund (41) so einwirkt, daß er den Ventilkörper (35) in seiner Hochschaltlage hält, andererseits an der Öffnung (44) des Solenoids (42) anliegt, wo er durch wechselseitiges Schalten des Solenoids (42) über den Auslaß (45) zum Ölsumpf geführt oder über den Auslaß (43) von dem Steuerbund (41) abgesperrt wird und so in seiner Höhe verändert werden kann,
- durch die Regelung des Druckes im Ablegeraum (12) die daraus resultierende an der Kupplungsscheibe (10) auftretende Druckdifferenz zwischen dem Anlegeraum (11) und dem Ablegeraum (12) die Kraft der Überbrükkungskupplung derart verändert, daß eine erwünschte Größe des Schlupfes zwischen der Antriebswelle und der Abtriebswelle steuerbar ist.

3. Steuereinrichtung für eine Überbrückungskupplung (10) eines hydrokinetischen Drehmomentwandlers (5) in Verbindung mit einem Druckmittelkreislauf in einem hydrokinetisch-mechanischen Verbundgetriebe, insbesondere für Kraftfahrzeuge,
- mit einem Überbrückungskupplungdruck-Steuerventil (46), an dem Leitungsdruck anliegt, der durch Einwirken eines Steuerdruckes (Ps) in Abhängigkeit von Betriebszuständen selektiv einem Anlege-Druckraum (11) oder einem Ablege-Druckraum (12) zuführbar ist,
- das Überbrückungskupplungdruck-Steuerventil (46) aus einem in einer Ventilbohrung (47) angeordneten Ventilkörper (48) mit vier Steuerbünden (50, 51, 52 und 53) besteht, der über eine Ventilfeder (49) in seiner Ausgangslage gehalten ist, in der er Leitungsdruck zwischen den Steuerbünden (50 und 51) zum Ablege-Druckraum (12) führt und den Anlege-Druckraum (11) über eine Leitung (15) zwischen den Steuerbünden (51 und 52) mit dem Kühler (17) verbindet,
- am Steuerbund (53) der Steuerdruck (Ps) anlegbar ist, der den Ventilkörper (48) in seine Hochschaltlage bewegt, in der er Leitungsdruck einerseits zwischen den Steuerbünden (52 und 53) dem Anlege-Druckraum (11), andererseits zwischen den Steuerbünden (51 und 52) dem Kühler zuführt und den Ablege-Druckraum (12) zwischen den Steuerbünden (50 und 51) mit einem Auslaß verbindet,
**dadurch gekennzeichnet**, daß
- die zwischen den Steuerbünden (50 und 51) abgehende Auslaßleitung (55) zu dem Ventilraum (56) zwischen dem Steuerbund (53) und einem pulsweitenmodulierten Solenoid (54) führt, wo der herrschende Druck einerseits auf den Steuerbund (53) so einwirkt, daß er den Ventilkörper (48) in seiner Hochschaltlage hält, andererseits an der Öffnung (44) des Solenoids (54) anliegt, wo er durch wechselseitiges Schalten des Solenoids (54) über den Auslaß (45) zum Druckmittelsumpf (1) geführt oder über den Auslaß (43) mit dem Steuerdruck Ps verbunden wird, wodurch dieser sich bis zu dem Ablegeraum (12) fortpflanzen kann,
- durch die Regelung des Druckes im Ablegeraum (12) die daraus resultierende an der Kupplungsscheibe (10) auftretende Druckdifferenz zwischen dem Anlegeraum (11) und dem Ablegeraum (12) die Kraft der Überbrükkungskupplung derart verändert, daß eine erwünschte Größe des Schlupfes zwischen Antriebsseite und Abtriebsseite steuerbar ist.

## Claims

1. A control system for a lock-up clutch (10) of a hydrokinetic torque converter (5) in conjunction with a pressure medium circuit in a hydrokinetic/mechanical compound transmission, in particular for motor vehicles,
- with a lock-up clutch control valve (13) at which there is applied a line pressure which can be supplied selectively to an application pressure chamber (11) or a release pressure chamber (12) as a function of operating states by the action of a control pressure (Ps), the lock-up clutch control valve (13) consists of a valve body (20) with four control bands (22, 23, 24 and 25) which is arranged in a valve orifice (19) and is held via a valve spring (21) in its starting position in which it guides line pressure between the control bands (22 and 23) to the release pressure chamber (12) and connects the application pressure chamber (11) via a line (15) between the control bands (23 and 24) to the cooler (17),
- at the control band (25) there can be applied the control pressure (Ps) which moves the valve body (20) into its shift-up position in which it supplies line pressure, on the one hand, between the control bands (24 and 25) to the application pressure chamber (11) and, on the other hand, between the control bands (23 and 24) to the cooler and connects the release pressure chamber (12) between the control bands (22 and 23) to an outlet,
characterised in that
- in the outlet line (31) issuing between the control bands (22 and 23) there is arranged a lock-up clutch control valve (32) in the form of a pulse width modulated solenoid valve by means of which the pressure difference occurring between the application pressure chamber (11) and the release pressure chamber (12) owing to the throttle opening (18) in the clutch plate (10) can be reduced so that the clutch force of the lock-up clutch can be controlled so as to allow a specific desired slippage.

2. A control system for a lock-up clutch (10) of a hydrokinetic torque converter (5) in conjunction with a lubricant circuit in a hydrokinetic/mechanical compound transmission, in particular for motor vehicles, wherein at a lock-up clutch pressure control valve (33) there is applied a line pressure which can be supplied selectively to an application pressure chamber (11) or a release pressure chamber (12) as a function of operating states via acting control pressure or acting control signals,
characterised in that
the lock-up clutch pressure control valve (33) consists of a valve body (35) with five control bands (37, 38, 39, 40 and 41) which is arranged in a valve orifice (34) and is held via a valve spring (36) in its starting position in which it leads line pressure between the control bands (37 and 38) to the release pressure chamber (12) and connects the application pressure chamber (11) via a line to the cooler at the control band (41) the control pressure (Ps) can be applied by activation of a pulse width-modulated solenoid (42) which moves the valve body (35) against the force of the valve spring (36) into its shift-up position in which it guides line pressure between the control bands (39 and 40) into the application pressure chamber (11) while it connects the release pressure chamber (12) between the control bands (37 and 38) to an outlet which leads via a line to the underside of the valve body (35) where the prevailing pressure, on the one hand, acts on the control band (41) in such a way that it holds the valve body (35) in its shift-up position and, on the other hand, rests on the opening (44) of the solenoid (42) where it is guided by selective shifting of the solenoid (42) via the outlet (45) to the oil sump or is blocked via the outlet (43) by the control band (41) and can thus be altered in value, owing to the regulation of the pressure in the release chamber (12), the resultant pressure difference occurring at the clutch plate (10) between the application chamber (11) and the release chamber (12) alters the force of the lock-up clutch such that a desired value of the slippage between the driving shaft and the driven shaft can be controlled.

3. A control system for a lock-,up clutch (10) of a hydrokinetic torque converter (5) in conjunction with a pressure medium circuit in a hydrokinetic/mechanical compound transmission, in particular for motor vehicles,
- with a lock-up clutch pressure control valve (46) at which there is applied a line pressure which can be supplied selectively to an application pressure chamber (11) or a release pressure chamber (12) as a function of operating states by the action of a control pressure (Ps),
- the lock-up clutch pressure control valve (46) consists of a valve body (48) with four control bands (50, 51, 52 and 53) which is arranged in a valve orifice (47) and is held by a valve spring (49) in its starting position in which it guides line pressure between the control bands (50 and 51) to the release pressure chamber (12) and connects the application pressure chamber (11) via a line (15) between the control bands (51 and 52) to the cooler (17),
- at the control band (53) there can be applied the control pressure (Ps) which moves the valve body (48) into its shift-up position in which it supplies line pressure, on the one hand, between the control bands (52 and 53) to the application pressure chamber (11) and, on the other hand, between the control bands (51 and 52) to the cooler and connects the release pressure chamber (12) between the control bands (50 and 51) to an outlet,
characterised in that
- the outlet line (55) issuing between the control bands (50 and 51) leads to the valve chamber (56) between the control band (53) and a pulse width-modulated solenoid (54), where the prevailing pressure, on the one hand, acts on the control band (53) such that it holds the valve body (48) in its shift-up position and, on the other hand, rests on the opening (44) of the solenoid (54) where, by selective shifting of the solenoid (54), it is guided via the outlet (45) to the pressure medium sump (1) or is connected via the outlet (43) to the control pressure (Ps), so that the control pressure (Ps) can be propagated to the release chamber (12),
- owing to the regulation of the pressure in the release chamber (12), the resultant pressure difference between the application chamber (11) and the release chamber (12) occurring at the clutch plate (10) alters the force of the lock-up clutch such that a desired value of the slippage between driving side and driven side can be controlled.

## Revendications

1. Dispositif de commande, pour un embrayage de pontage (10) d'un convertisseur de couple hydrocinétique (5), en liaison avec un circuit de fluide sous pression, dans une transmission hybride hydrocinétique-mécanique, en particulier pour véhicules automobile,
- avec une soupape de commande de couplage de pontage (13), exposée à la pression de conduite, pouvant être amenée de façon sélective à une enceinte de pression d'application (11) ou à une enceinte de pression de décollement (12), en fonction d'états de fonctionnement, par action d'une pression de commande (Ps),
- la soupape de commande de couplage de pontage (13) étant composée d'un corps de soupape (20), disposé dans un alésage de soupape (19), avec quatre collerettes de commande (22, 23, 24 et 25), corps de soupape maintenu, par l'intermédiaire d'un ressort de soupape (21), à sa position initiale, dans laquelle il guide la pression de conduite entre les collerettes de commande (22 et 23) à l'enceinte de pression de décollement (12) et relie l'enceinte de pression d'application (11) au refroidisseur (17), par l'intermédiaire d'une conduite (15), entre les collerettes de commande (23 et 24).
- la pression de commande (Ps) étant susceptible d'être appliquée sur la collerette de commande (25) et déplaçant le corps de soupape (20) dans sa position de commutation la plus élevée, dans laquelle il guide la pression de conduite, d'une part, entre les collerettes de commande (24 et 25) à l'enceinte de pression d'application (11), d'autre part, entre les collerettes de commande (23 et 24), au refroidisseur, et relie à une évacuation l'enceinte de pression de décollement (12), entre les collerettes de commande (22 et 23),
caractérisé en ce que
- dans la conduite d'évacuation (31) partant entre les collerettes de commande (22 et 23) est disposée une soupape de commande de couplage de pontage (32) se présentant sous la forme d'une électrovanne modulée par largeur d'impulsions, électrovanne au moyen de laquelle la différence de pression survenant entre l'enceinte de pression d'application (11) et l'enceinte de pression de décollement (12), due à l'ouverture d'étranglement (18) ménagée dans le disque d'embrayage (10), peut être modulée de manière que la force de couplage de l'embrayage de pontage puisse être commandée de façon à permettre un glissement souhaité déterminé.

2. Dispositif de commande, pour un embrayage de pontage (10) d'un convertisseur de couple hydrocinétique (5), en liaison avec un circuit de lubrifiant, dans une transmission hybride hydrocinétique-mécanique, en particulier pour véhicules automobile, où sur une soupape (33) de commande par pression de l'embrayage de pontage est appliquée une pression de conduite, pouvant être amenée, par l'intermédiaire de la mise en action d'une pression de commande ou de signaux, en fonction d'états de fonctionnement, à une enceinte de pression d'application (11) ou à une enceinte de pression de décollement (12)
caractérisé en ce que
la soupape de commande de pression d'embrayage de pontage (33) est composée d'un corps de soupape (35) muni de cinq collerettes de commande (37,38,39,40 et 41), disposées dans un alésage de soupape (34), maintenue, par l'intermédiaire d'un ressort de soupape (36), à sa position initiale, dans laquelle elle guide la pression de conduite entre les collerettes de commande (37 et 38) vers l'enceinte de pression de décollement (12) et relie l'enceinte de pression d'application (11) au refroidisseur, par l'intermédiaire d'une conduite,
- la pression de commande (Ps) peut être appliquée sur la collerette de commande (41), par activation d'une électrovanne (42) modulée par largeur d'impulsions, déplaçant le corps de soupape (35) à l'encontre de la force du ressort de soupape (36), dans sa position de commutation maximale, position dans laquelle il guide entre les collerettes de commande (39 et 40) la pression de conduite dans l'enceinte de pression d'application (11), tandis qu'il relie, entre les collerettes de commande (37 et 38), l'enceinte de pression de décollement (12) à une évacuation menant, par une conduite, à la face inférieure du corps de soupape (35), où la pression en action agit, d'une part sur la collerette de commande (41), de manière à maintenir le corps de soupape (35) à sa position de commutation maximale, et est d'autre part présente au niveau de l'ouverture (44) de l'électrovanne (42), où par alternance de commutation de l'électrovanne (42), elle est dirigée par l'évacuation (45) vers le carter d'huile ou isolée de la collerette de commande (41) par l'évacuation (43), faisant ainsi que son intensité peut être modifiée,
- la force du couplage de pontage est modifiée, de manière à pouvoir commander une valeur souhaitée de glissement entre l'arbre d'entraînement et l'arbre entraîné, au moyen de la différence de pression sur le disque d'embrayage (10), entre l'enceinte de pression d'application (11) et l'enceinte de pression de décollement (12), résultant de la régulation de la pression dans l'enceinte de pression de décollement (12).

3. Dispositif de commande, pour un embrayage de pontage (10) d'un convertisseur de couple hydrocinétique (5), en liaison avec un circuit de fluide sous pression, dans une transmission hybride hydrocinétique-mécanique, en particulier pour véhicules automobiles,
- avec une soupape de commande (46) de la pression de couplage de pontage, exposée à la pression de conduite, pouvant être amenée de façon sélective à une enceinte de pression d'application (11) ou à une enceinte de pression de décollement (12), par action d'une pression de commande (Ps),
- la soupape de commande (46) de la pression de couplage de pontage étant composée d'un corps de soupape (48), disposé dans un alésage de soupape (47), avec quatre collerettes de commande (50, 51, 52 et 53), corps de soupape maintenu, par l'intermédiaire d'un ressort de soupape (49), à sa position initiale, dans laquelle il guide la pression de conduite entre les collerettes de commande (50 et 51) à l'enceinte de pression de décollement (12) et relie l'enceinte de pression d'application (11) au refroidisseur (17), par l'intermédiaire d'une conduite (15), entre les collerettes de commande (51 et 52).
- la pression de commande (Ps) déplaçant le corps de soupape (49) dans sa position de commutation la plus élevée étant susceptible d'être appliquée sur la collerette de commande (53), position dans laquelle elle amène la pression de conduite, d'une part, entre les collerettes de commande (52 et 53) à l'enceinte de pression d'application (11), d'autre part, entre les collerettes de commande (51 et 52), au refroidisseur, et relie à une évacuation l'enceinte de pression de décollement (12), entre les collerettes de commande (50 et 51),
caractérisé en ce que
- la conduite d'évacuation (55) partant entre les collerettes de commande (50 et 51) mène à l'espace de soupape (56), entre la collerette de commande (53) et une électrovanne (54) modulée en largeur d'impulsions, la pression y régnant agissant, d'une part, sur la collerette de commande (53), de manière à maintenir le corps de soupape (48) à sa position de commutation maximale, d'autre part, appuie sur l'ouverture (44) de l'électrovanne (54), où par commutation alternée de l'électrovanne (54), elle est guidée par l'intermédiaire de l'évacuation (45) au carter de fluide sous pression (1) ou est relié, par l'intermédiaire de l'évacuation (43), à la pression de commande Ps, faisant que celle-ci peut se propager jusqu'à l'enceinte de décollement (12),
- la force du couplage de pontage est modifiée, de manière à pouvoir commander une valeur souhaitée de glissement entre l'arbre d'entraînement et l'arbre entraîné, au moyen de la différence de pression sur le disque d'embrayage (10), entre l'enceinte de pression d'application (11) et l'enceinte de pression de décollement (12), résultant de la régulation de la pression dans l'enceinte de pression de décollement (12).
